# EUROPÄISCHE PATENTSCHRIFT

(11) **EP 0 952 385 B1**
(45) Veröffentlichungstag und Bekanntmachung des Hinweises auf die Patenterteilung: **23.06.2004**
(21) Anmeldenummer: 99107129.1
(22) Anmeldetag: 13.04.1999
(51) Int. Cl.: F16P 3/08, B04B 7/06

(54) **Sicherheitsverschluss für Deckel**
Safety lock for cover
Fermeture de sécurité pour couvercle

(30) Priorität: 20.04.1998 DE 29806972 U
(43) Veröffentlichungstag der Anmeldung: 27.10.1999
(73) Patentinhaber: Andreas Hettich GmbH & Co. KG, 78532 Tuttlingen (DE)
(72) Erfinder: Eberle, Günter, 78532 Tuttlingen (DE)
(74) Vertreter: Riebling, Peter, Dr.-Ing.

(56) Entgegenhaltungen:
- DE-A- 2 527 474
- DE-U- 29 806 972
- GB-A- 1 470 997

## Beschreibung

Gegenstand der Erfindung ist eine Anordnung eines Sicherheitsverschlusses zwischen einem Deckel und einem Gehäuse nach dem Oberbegriff des Patentanspruchs 1, insbesondere für Zentrifugen für die Bereiche Arztpraxen, Krankenhaus, Klinik-Labor, Wissenschaft, Forschung und Industrie.

Die Erfindung soll aber nicht nur auf diesen Anwendungsfall für Zentrifugen beschränkt werden, sondern soll ein breiteres Anwendungsspektrum abdecken, wie beispielsweise Sicherheitsverschlüsse für Deckel bei Haushaltsgeräten, Spielen, elektrischen und elektronischen Unterhaltungsgeräten oder allgemein bei Geräten, bei denen Verletzungsgefahr für einen Benutzer durch Berührung mit bewegten Teilen des Gerätes im Gefahrenbereich oder durch herausfliegendes Material besteht.

Derartige Sicherheitsverschlüsse für Deckel werden bereits in Zentrifugen mit Winkel- und Ausschwingrotoren eingesetzt, wie beispielsweise in der Gerätereihe Universal 16A des Anmelders selbst und sind heute auf dem Markt überall erhältlich.

Diese Sicherheitsverschlüsse für Deckel bei Zentrifugen werden benötigt um bei den hohen auftretenden Umdrehungszahlen von ca. 18000 1/min Unfallgefahren für den Benutzer abzuwenden und gleichzeitig den Inhalt vor dem Herausschleudern zu sichern.

Nachteil bisher war es, daß das Deckelverschluß-System der Zentrifugen vollkommen außen am Gerät angebracht war und somit Nachteile wie Verletzungsgefahr für den Benutzer, Beschädigungsgefahr für das Gerät, erhöhter Platzbedarf durch große Außenmaße und Designmängel in Kauf genommen werden mußten.

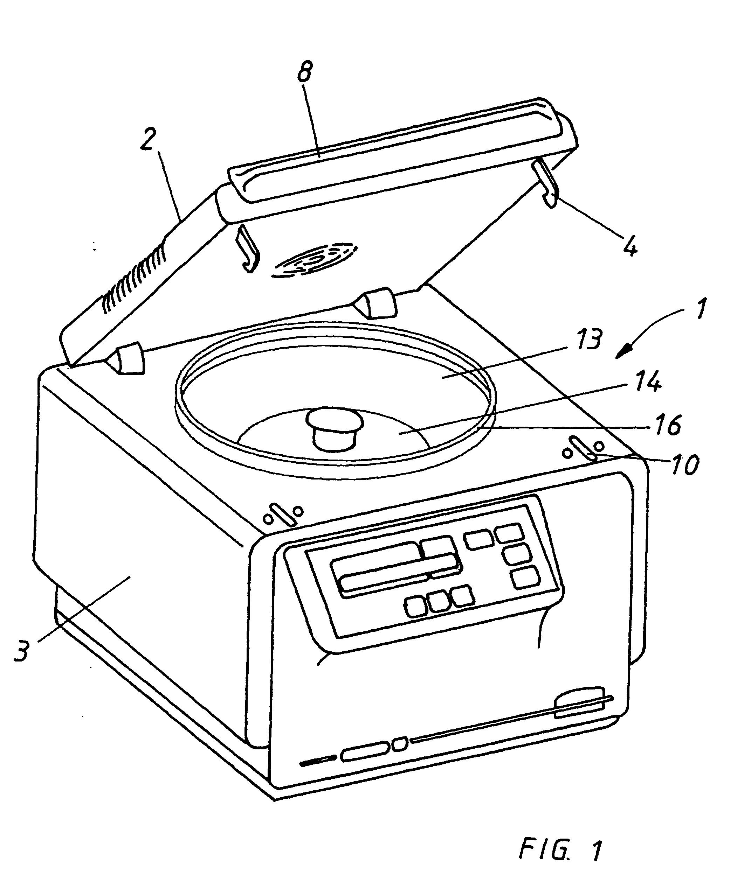

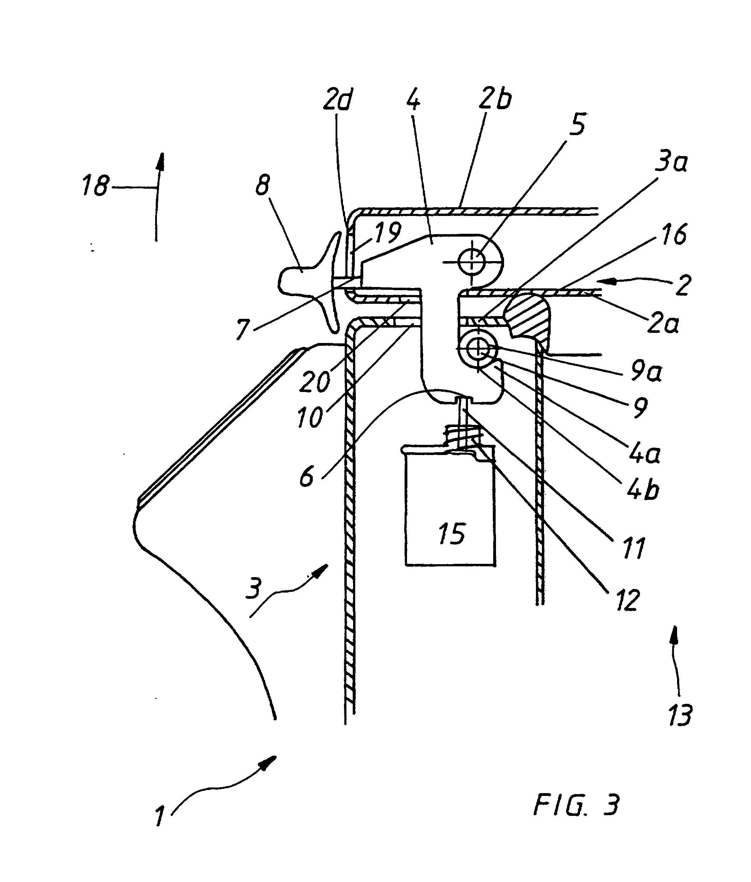

Die DE-OS 25 27 474 A1 zeigt eine Anordnung gemäß Oberbegriff des Anspruchs 1, insbesondere zeigt sie Wäscheschleuder mit einem Gehäuse und einem darin aufgenommenen Schleuderraum, wobei das Gehäuse von oben her durch einen schwenkbar angeordneten Deckel verschlossen werden kann. Der Schleuderraum dient zur Aufnahme von Schleudergut, wobei der Schleuderraum selbst durch einen entsprechenden Rotor angetrieben wird. Der Deckel 6 ist zweiteilig ausgebildet und besitzt ein Deckeloberteil 5 und ein Deckelunterteil 24, wobei diese beiden Deckelteile über eine entsprechende Verbindungsachse 22 schwenkbar miteinander verbunden sind. Diese Verbindungsachse 22 ist in der Nähe der Schwenkachse 4 des gesamten Deckels 6 zum Gehäuse angeordnet, welche Schwenkachse 4 im hinteren Bereich der Wäscheschleuder angeordnet ist. Der Schwenkachse 4 gegenüberliegend am oberen Deckel 5 ist eine hakenförmige Verschlussvorrichtung 14 vorgesehen, welche schwenkbar um eine Achse 11 dort angeordnet ist. Dieses hakenförmige Verschlusselement 14 besitzt auf der anderen Seite der Drehachse 11 einen Arm 10, an welchem eine Handbetätigung 12 angebracht ist, welche Handbetätigung 12 durch eine Öffnung 9 des oberen Deckels 5 hindurchgreift. Somit kann der Haltehaken 14 durch die außerhalb des Deckels 6 befindliche Handbetätigung 12 bewegt werden und außer Eingriff gebracht werden. Dadurch dass der Haltehaken 14 durch eine Feder 16 in seiner Verschlusslage gehalten wird, ist der Deckel solange verriegelt, bis der entsprechende Betätigungstaster 12 wieder gedrückt wird und der Haltehaken 14 entgegen der Federkraft 16 um die Achse 11 verschwenkt. Der Haltehaken 14 greift nun durch eine Öffnung 25 im unteren Deckelteil 24 hindurch und greift durch einen Schlitz 15 auf der oberen Seite des Gehäuses der Wäscheschleuder hindurch, um an einer entsprechenden Rastkante 30a (Figuren 1 und 3) festzuliegen.

Nachteil dieser Ausführungsform des Standes der Technik ist, dass leicht aus Versehen auf den Öffnungshebel 12 gedrückt werden kann und somit der Haltehaken um die Achse 11 verschwenkt wird und außer Eingriff mit der Haltekante 30a im Gehäuse der Wäscheschleuder kommt, so dass die Gefahr besteht, dass der Deckel sich vom Gehäuse löst und sich derart öffnet, dass eine Verletzungsgefahr für den Benutzer besteht, als auch eine Beschädigungsgefahr für den Wäschetrockner. Hierfür ist eine weitere Vorrichtung 30 - 32 vorgesehen, welche verhindern soll, dass sich der Deckel 6 unbeabsichtigt öffnet. Diese Verrastvorrichtung besitzt einen Flügel 30, welcher derart schwenkbar um eine Schwenkachse 31 angeordnet ist, dass er durch den Luftstrom der im Betrieb rotierenden Trommel der Maschine um die Schwenkachse 31 gedreht wird (Figur 5) und eine entsprechende Haltenase 29 an einer gehäusefesten Haltenase 28 rastend eingreift. Insbesondere beim Anfahren und Abschalten der Wäscheschleuder besteht jedoch die Gefahr, dass dieser Flügel durch den Luftstrom der Wäschetrommel nicht in genügendem Masse verschwenkt wird und dadurch keine genügende Rastsicherung gewährleistet ist. Auch besteht hierbei die Gefahr, da die Verriegelungsvorrichtung 30 - 32 innerhalb des Schleuderraumes angeordnet ist, dass diese Verriegelung sich mit Schmutz (z. B. Wäschefasern) zusetzt und dadurch eine zuverlässige Funktion nicht mehr gewährleistet ist.

Wesentlicher Nachteil ist also, dass die Verschlusseinheit und die Verrieglungseinheit des Deckels nicht innerhalb eines einzigen Elementes zusammengeführt sind, also der Haltehaken 14 und der Flügel 30 nicht innerhalb eines einzigen Elementes kombiniert sind.

Der Erfindung liegt deshalb die Aufgabe zugrunde, die oben genannten Nachteile wie Verletzungsgefahr, Beschädigungsgefahr, erhöhter Platzbedarf und Designmängel zu beseitigen und zudem eine gewisse Leichtgängigkeit beim Deckelöffnen und -schließen und eine damit verbundene Einhandbedienung zu ermöglichen.

Zur Lösung dieser gestellten Aufgaben ist die Erfindung durch die technische Lehre des Patentanspruches 1 gekennzeichnet.

Vorteile dieser Lösung sind geringere Verletzungsgefahr für das Bedienpersonal, geringere Beschädigungsgefahr aufgrund des weitgehend integrierten Verschluß-Systems, geringerer Platzbedarf, formschönes, zeitgemäßes Design, Leichtgängigkeit und Einhandbedienung.

Wesentliches Merkmal der Erfindung ist, daß als Verschlusselement ein innerhalb des Gehäuses angebrachter Verschlussbolzen dient, und dass das Halteelement eine Ausklinkung zur Verriegelung besitzt, in welche ein Verriegelungsstift eines Betätigungselementes formschlüssig verriegelnd in Eingriff bringbar ist, wobei das Betätigungselement zur Betätigung des Verriegelungsstiftes von einer Gerätesteuerung in Abhängigkeit des Gerätezustandes angesteuert ist.

Es ist also mindestens ein Halteelement durch die Deckelunterseite durchgeführt, und innerhalb des Gehäuses lösbar befestigt, wobei dieses Halteelement hakenförmig ausgebildet ist. Wichtig hierbei ist, daß das Verschluß-System innerhalb der Zentrifuge angebracht ist.

Die Ausklinkung kann die Form einer Nut haben, in die der Verriegelungsstift während des Betriebszustandes des Rotors eingreift, um währenddessen ein Öffnen des Deckels zu verhindern.

Dieser Verriegelungsstift wird über ein Betätigungselement wie beispielsweise ein Magnetventil oder dergleichen mit dieser Nut des Halteelementes in oder außer Eingriff gebracht, je nach Betriebszustand der Zentrifuge, wobei dieses Betätigungselement von der Gerätesteuerung betrieben wird. Bei laufendem Rotor wird der Verriegelungsstift in die Nut des Halteelementes eingebracht und solange dort gehalten, bis der Rotor wieder still steht.

Es ist also nur ein Öffnen oder Schließen des Deckels bei Stillstand des Rotors möglich, da in diesem Fall der Verriegelungsstift nicht in die entsprechende Ausklinkung im Halteelement eingreift.

Analog dazu ist nur ein Betrieb des Rotors möglich, wenn der Deckel geschlossen ist, das Halteelement also entsprechend am Verschlußbolzen formschlüssig eingerastet ist. Dazu dient ein Sensor, der die Stellung des Halteelementes erfaßt und somit den Öffnungszustand des Deckels.

In einer bevorzugten Ausführungsform werden zwei Halteelemente eingesetzt, welche im vorderen Bereich der Zentrifuge in der Nähe der Seitenwände des Deckels angebracht sind und dort drehbar auf einem Lagerzapfen gelagert werden.

Für den Fall, daß mehr wie zwei Halteelemente vorgesehen sind, sind diese untereinander über ein Verbindungselement fest miteinander verbunden, wobei das Verbindungselement gleichzeitig durch eine in der Deckelvorderseite eingebrachte Öffnung aus dem Deckel herausragt. Der nach außen ragende Teil des Verbindungselementes nimmt über eine nicht lösbare Preß-, Schraub-, Niet- Löt- oder Schweißverbindung eine ergonomische Griffleiste mit anti-rutsch Profilierung auf, welche vorzugsweise aus einem Kunststoff besteht.

Falls nur ein Halteelement vorgesehen ist, ist entweder zumindest ein weiterer Lagerzapfen ohne Halteelement im Deckel vorgesehen, oder aber das einzige Halteelement mit dem daran befindlichen Verbindungselement und Griffleiste ist entsprechend biege- und torsionssteif dimensioniert.

Das Halteelement durchgreift während des Schließens des Deckels einen passenden Schlitz an der Gehäuseoberseite der Zentrifuge, wo er durch Betätigung der Griffleiste nach unten über den Verschlußbolzen geschoben werden kann, welcher sich im Innern des Gehäuses unterhalb des Schlitzes befindet.

Auch ist es bei der Erfindung vorgesehen, daß sich die gesamte Verriegelungseinheit innerhalb des Gehäuses und außerhalb des durch einen Dichtungsring abgedichten Schleuderraumes befindet, mit Ausnahme der Griffleiste und Teile des Verbindungselementes.

Durch die Stellung der Griffleiste kann der Verschlußzustand des Halteelementes und damit des Deckels weitgehend abgelesen werden. Ist die Griffleiste oben, ist der Deckel im geöffneten Zustand, ist die Griffleiste unten, ist der Deckel im geschlossenen Zustand.

Unterstützend kann dabei eine mechanische Anzeigeeinrichtung dienen, die vorzugsweise am Deckel angebracht ist, aber auch eine elektronische Anzeige ist optional möglich, welche über einen Positionssensor angesteuert wird. Dieser Sensor kann der gleiche Sensor sein, der zur Verriegelung des Deckels während des Rotorlaufes dient, muß aber nicht.

Im folgenden wird die Erfindung anhand von lediglich einen Ausführungsweg darstellenden Zeichnungen näher erläutert. Hierbei gehen aus den Zeichnungen und ihrer Beschreibung weitere Vorteile der Erfindung hervor.

Es zeigen:
Figur 1: Eine Tischzentrifuge mit Sicherheitsverschluß für Deckel gemäß der Erfindung;
Figur 2: Einen vertikalen Schnitt durch die Seitenansicht der Erfindungsgemäßen Tischzentrifuge in nicht verschlossenem Zustand (Ruhezustand) in der Nähe des Sicherheitsverschlusses;
Figur 3: Einen vertikalen Schnitt durch die Seitenansicht der Erfindungsgemäßen Tischzentrifuge in verschlossenem und verriegeltem Zustand (Betriebszustand) in der Nähe des Sicherheitsverschlusses;
Figur 4: Einen vertikalen Schnitt durch die Vorderansicht der Erfindungsgemäßen Tischzentrifuge in verschlossenem und verriegeltem Zustand in der Nähe des Sicherheitsverschlusses;

In Figur 1 wird eine Zentrifuge 1 mit Sicherheitsverschluß im Deckel 2 gemäß der Erfindung aufgezeigt. Der Deckel 2 ist im geöffneten und hochgeklappten Zustand, ist über zwei Scharniere mit dem Gehäuse 3 verbunden, und trägt in seiner, der Benutzer zugewandten Vorderseite, zwei hakenförmige Halteelemente 4.

Direkt darüber befindet sich die Griffleiste 8, welche im inneren des Deckels 2 über ein Verbindungselement 7 mit den Halteelementen 4 starr verbunden ist.

Unterhalb des Deckels 2 befindet sich die eigentliche Zentrifuge in einem Gehäuse 3 mit Schleuderraum 13 und dem darin befindlichen Rotor mit Deckel 14, wobei dieser Schleuderraum 13 bei geschlossenem Deckel 2 durch einen Dichtungsring 16 nach außen hin abgedichtet ist. An der Oberseite des Gehäuses 3a sind ebenfalls im vorderen Bereich zwei Schlitze 10 eingebracht, in welche die Halteelemente 4 des Deckels 2 im geschlossenen Zustand des Deckels 2 eingreifen.

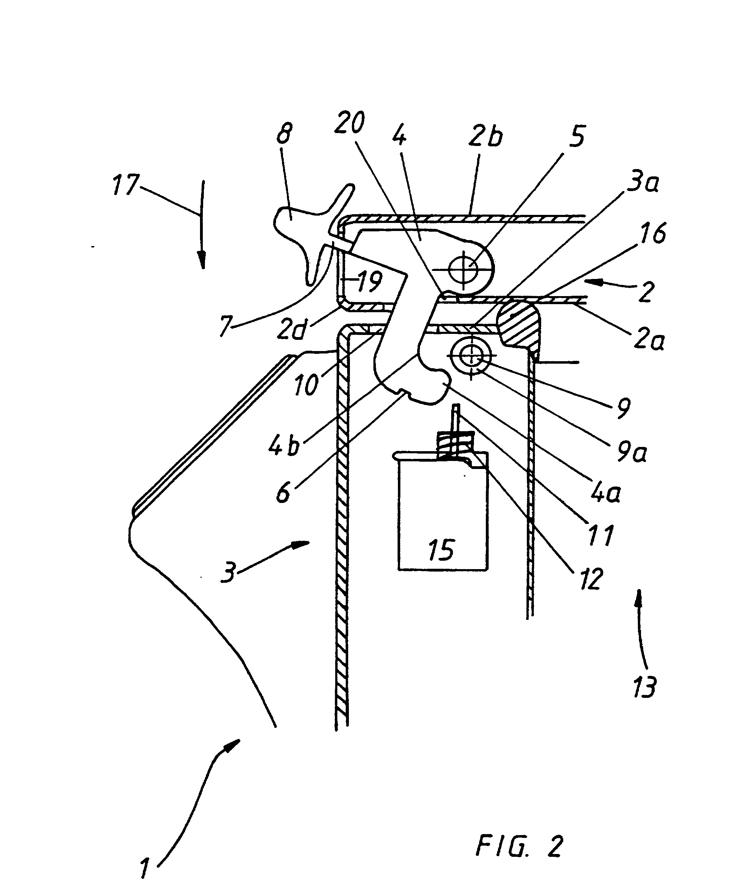

Figur 2 zeigt einen vertikalen Schnitt durch die Seitenansicht der Erfindungsgemäßen Tischzentrifuge 1 in nicht verschlossenem Zustand in der Nähe des Sicherheitsverschlusses.

Das Halteelement 4, welches durch die Deckelunterseite 2a durch die Öffnung 20 hindurchragt, ist auf einem deckelfesten Lagerzapfen 5 drehbar gelagert und über das Verbindungselement 7 mit dem anderen Halteelement 4 auf der anderen gegenüberliegenden Seite des Deckels 2 verbunden.

An diesem durch eine Öffnung 19 in der Deckelvorderseite 2d hindurchragendes Verbindungselement 7, ist eine Griffleiste 8 angebracht, welches eine ergonomische und sichere Bedienung des Deckels 2 gewährleisten soll.

Im unter dem Deckel 2 liegenden Gehäuse 3 ist ein Verschlußbolzen 9 angebracht, der im geschlossenen Zustand das Halteelement 4 formschlüssig umgreift und somit den Deckel 2 geschlossen hält. Über der Mantelfläche des Verschlußbolzens 9 kann zusätzlich eine reibungsvermindernde Gleitrolle 9a angebracht sein, um die Leichtgängigkeit zu erhöhen und somit eine Einhandbedienung zu ermöglichen. Es kann aber auch nur eine reibungsvermindernde Beschichtung des Verschlußbolzens 9 vorgesehen sein.

Am oberen Rand des Schleuderraumes 13 in Nähe des geschlossenen Deckels 2 ist der Dichtungsring 16 angebracht, der den Schleuderraum 13 an Deckelunterseite 2a zur Umgebung hin abdichtet.

Das Halteelement 4 besitzt an dem Boden zugewandten Teil eine Ausklinkung 6, welche bei laufendem Rotor 14 mit dem Verriegelungsstift 11 formschlüssig in Einrastung sich befindet. Hierdurch wird verhindert, daß bei laufendem Rotor 14 sich ungewollt der Deckel 2 öffnet, oder durch den Bediener geöffnet wird.

Der Verriegelungsstift 11 mit Rückholfeder 12 wird durch ein Betätigungselement 15 wie beispielsweise ein Magnetventil betätigt, wobei das Magnetventil in Abhängigkeit des Betriebszustandes des Gerätes mittels der Gerätesteuerung angesteuert wird. Das Magnetventil ist im inneren des Gehäuses 3 angebracht, bringt den Verriegelungsstift 11 beim Gerätestart in die Ausklinkung 6 ein, und holt über die Rückholfeder 12 den Verriegelungsstift 11 am Programmende wieder in Ausgangsposition, also aus der Einrastung mit der Ausklinkung 6 heraus, wenn der Rotor still steht.

Zusätzlich kann bei geöffnetem Deckel 2 durch einen Sensor, beispielsweise ein Endschalter der die Position des Halteelements 4 ermittelt, das Gerät nicht betrieben werden.

Durch Betätigung der Griffleiste 8 in Pfeilrichtung 17 nach unten wird der Deckel 2 geschlossen.

Figur 3 zeigt die gleichen Bauteile wie Figur 2, jedoch befindet sich die Tischzentrifuge in verschlossenem und verriegeltem Zustand (Betriebszustand).

Die Griffleiste 8 wurde also soweit zusammen mit dem Verbindungselement 7 und den Halteelementen 4 heruntergedrückt, so daß die Halteelemente 4 über die Verschlußbolzen 9 darüberrutschen und somit eine formschlüssige Verbindung zwischen Halteelement 4 und Verschlußbolzen 9 entsteht.

Dieses Überrutschen des Halteelementes 4 mit seiner Haltenocke 4a über den Verschlußbolzen 9 ist möglich, da der Dichtungsring 16 am oberen Rand des Schleuderraumes 13 durch die Betätigung der Griffleiste 8 nach unten und das damit gleichzeitig verbundene Herunterdrücken des Deckels 2, sich elastisch verformt.

Nach dem Einrasten des Verschlußbolzens 9 im Haltelager 4b des Halteelementes 4 entspannt sich der Dichtungsring 16 wieder teilweise und sichert mit seiner Restverformung und der daraus resultierenden, vertikal verspannenden Kraftwirkung zwischen Deckel 2 und Gehäuse 3 bzw. zwischen Haltelager 4b und Verschlußbolzen 9, ein unbeabsichtigtes Öffnen des Deckels 2.

Unterstützend zu dieser Spannwirkung durch den Dichtungsring 16 kann eine federnde Lagerung des Verschlußbolzens 9 und/oder des Lagerzapfens 5 und/oder der Scharniere 21 des Deckels 2 in einer anderen Ausführungsform der Erfindung vorgesehen sein.

Zusätzlich dazu wirken die Federn der Scharniere 21 zur Positionshaltung des geöffneten Deckels 2 verstärkend auf die Schließwirkung.

Sobald der Rotor 14 durch den Start des Programmes anläuft, wird der Verriegelungsstift 11 durch das Magnetventil 15 in die Ausklinkung 6 des Halteelementes 4 formschlüssig eingebracht, und somit der Deckel 2 verriegelt. Kein Öffnen, gewollt oder ungewollt ist nun mehr möglich, solange der Rotor 14 sich dreht.

Durch Betätigung der Griffleiste 8 in Pfeilrichtung 18 nach oben wird der Deckel 2 wieder geöffnet.

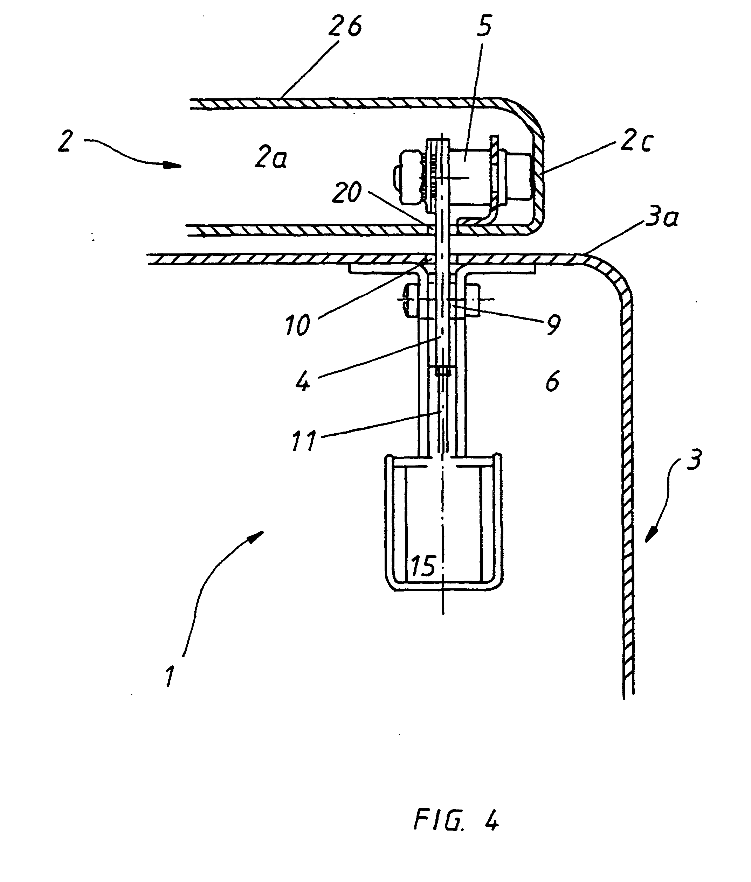

Figur 4 zeigt einen vertikalen Schnitt durch die Vorderansicht der Erfindungsgemäßen Tischzentrifuge in verschlossenem und verriegeltem Zustand in der Nähe des Sicherheitsverschlusses.

Hierbei ist zu sehen, daß der Lagerzapfen 5 im inneren des Deckels 2 in der Nähe der Deckelaußenseite 2c angebracht ist.

Auf diesem Lagerzapfen 5 ist das Halteelement 4 gelagert, welches durch die Öffnung 20 in der Deckelunterseite 2a hindurchgreift und über den Zwischenraum zwischen Deckel 2 und Gehäuse 3 durch den Schlitz 10 der Gehäuseoberseite 3a am Verschlußbolzen 9 formschlüssig festliegt.

Der Verriegelungsstift 11, betätigt durch das Betätigungselement 15, greift formschlüssig in die Ausklinkung 6 zur Verriegelung des Deckels 2 ein, in Abhängigkeit des Gerätezustandes. Im Betriebszustand steht der Verriegelungsstift 11 im Eingriff, im Ruhezustand ist er außer Eingriff mit der Ausklinkung 6 des Halteelementes 4.

### Zeichnungslegende

Zentrifuge 1
Deckel 2
Deckelunterseite 2a
Deckeloberseite 2b
Seitenwände des Deckels 2c
Deckelvorderseite 2d
Gehäuse 3
Gehäuseoberseite 3a
Halteelement 4
Haltenocke 4a
Haltelager 4b
Lagerzapfen 5
Ausklinkung 6
Verbindungselement 7
Griffleiste 8
Verschlußbolzen 9
Gleitrolle 9a
Schlitz 10
Verriegelungsstift 11
Rückholfeder 12
Schleuderraum 13
Rotor mit Deckel 14
Betätigungselement 15
Dichtungsring 16
Pfeilrichtung 17
Pfeilrichtung 18
Öffnung 19
Öffnung 20
Scharnier 21

## Patentansprüche

1. Anordnung eines Sicherheitsverschlusses (4-9, 11, 12, 15) zwischen einem Deckel (2) und einem Gehäuse (3) einer Zentrifuge oder einem ähnlichen Gerät, die/das innerhalb des Gehäuses (3) einen Rotor (14) mit einem nach einer Seite des Gehäuses (3) hin offenen Schleuderraum (13) zur Aufnahme von Schleudergut beinhaltet, wobei der Schleuderraum (13) mittels des schwenkbar am Gehäuse (3) angebrachten Deckels (2) verschließbar ist, und wobei mindestens ein hakenförmiges Halteelement (4) drehbar auf einem Lagerzapfen (5) am Deckel (2) sich befindet und durch die Deckelunterseite (2a) hindurchgeführt ist und mit einem Verschlusselement (9) des Gehäuses (3) zusammenwirkt, **dadurch gekennzeichnet, daß** als Verschlusselement ein innerhalb des Gehäuses (3) angebrachter Verschlussbolzen (9) dient, und dass das Halteelement (4) eine Ausklinkung (6) zur Verriegelung besitzt, in welche ein Verriegelungsstift (11) eines Betätigungselementes (15) formschlüssig verriegelnd in Eingriff bringbar ist, wobei das Betätigungselement (15) zur Betätigung des Verriegelungsstiftes (11) von einer Gerätesteuerung in Abhängigkeit des Gerätezustandes angesteuert ist.

2. Anordung eines Sicherheitsverschlusses nach Anspruch 1, **dadurch gekennzeichnet, daß** der Lagerzapfen (5) des Halteelementes (4) sich zwischen einer Deckeloberseite (2b) und einer Deckelunterseite (2a) des Deckels (2) befindet.

3. Anordung eines Sicherheitsverschlusses nach Anspruch 1 oder 2, **dadurch gekennzeichnet, daß** das Halteelement (4) ein Haltelager (4b) besitzt, in welchem der Verschlussbolzen (9) im verschlossenen Zustand des Deckels (2) mindestens teilweise formschlüssig umgriffen wird und der Verschlussbolzen (9) unter federnder Vorspannung eines Dichtungsringes (16), welcher den Schleuderraum (13) zwischen dem Deckel (2) und dem Gehäuse (3) abdichtet, gelagert wird.

4. Anordung eines Sicherheitsverschlusses nach Anspruch 3, **dadurch gekennzeichnet, daß** das Halteelement (4) eine Haltenocke (4a) besitzt, welche zum Öffnen und Schließen des Deckels (2), entgegen der Federkraft des vorgespannten Dichtungsringes (16), überwunden werden muß.

5. Anordung eines Sicherheitsverschlusses nach einem der Ansprüche 1 bis 4, **dadurch gekennzeichnet, daß** bei Vorsehen von mehreren Halteelementen (4), diese über ein Verbindungselement (7) untereinander verbunden sind, und dieses Verbindungselement (7) durch eine Öffnung (19) der Deckelvorderseite (2d) hindurchgreift und dort mit einer Griffleiste (8) verbunden ist.

6. Anordung eines Sicherheitsverschlusses nach einem der Ansprüche 1 bis 5, **dadurch gekennzeichnet, daß** ein geeigneter Sensor zur Abtastung der Stellung des Halteelementes (4) vorgesehen ist, zur Freischaltung des Rotors (14) im verschlossenen Zustand des Deckels (2).

## Claims

1. Arrangement of a safety-catch (4-9, 11, 12, 15) between a lid (2) and a casing (3) of a centrifuge or similar apparatus containing within the casing (3) a rotor (14) with a centrifuge chamber (13) open to one side of the casing (3) to receive material for centrifuging, the centrifuge chamber (13) being closable by means of the lid (2), which is hinged to the casing (3), and at least one hook-shaped retaining element (4) being located pivotably on a pivot-pin (5) on the lid (2) and led through the bottom panel (2a) of the lid, and cooperating with a catch element (9) of the casing (3), **characterized in that** a catch pin (9) fitted inside the casing (3) serves as the catch element (9), and **in that** the retaining element (4) has a notch (6) for locking into which a locking pin (11) of an actuating element (15) is engageable in a positively locking manner, the actuating element (15) being triggered by an apparatus control as a function of the apparatus condition to operate the actuating element (15).

2. Arrangement of a safety-catch according to Claim 1, **characterized in that** the pivot-pin (5) of the retaining element (4) is located between a top panel (2b) and a bottom panel (2a) of the lid (2).

3. Arrangement of a safety-catch according to Claim 1 or Claim 2, **characterized in that** the retaining element (4) has a retaining rest (4b) in which the catch pin (9) is at least partly positively clasped when the lid (2) is in the closed condition and in which the catch pin (9) rests under elastic preloading due to compression of a sealing ring (16) which seals off the centrifuge chamber (13) between the lid (2) and the casing (3).

4. Arrangement of a safety-catch according to Claim 3, **characterized in that** the retaining element (4) has a retaining cam lobe (4a) which must be traversed, against the spring force of the compressed sealing ring (16), in order to open and close the lid (2).

5. Arrangement of a safety-catch according to any one of Claims 1 to 4, **characterized in that** where several retaining elements (4) are provided, these are interconnected by a connecting element (7), and this connecting element (7) reaches through an opening (19) in the front (2d) of the lid, where it is joined to a bar handle (8).

6. Arrangements of a safety-catch according to any one of Claims 1 to 5, **characterized in that** a suitable sensor is provided to detect the position of the retaining element (4), to enable the rotor (14) to be switched on when the lid (2) is in the closed condition.

## Revendications

1. Dispositif de fermeture de sécurité (4-9, 11, 12, 15) disposé entre un couvercle (2) et un boîtier (3) d'une centrifugeuse ou d'un appareil similaire qui contient à l'intérieur dudit boîtier (3) un rotor (14) avec un espace de centrifugation (13) ouvert vers un côté du boîtier (3) et destiné à recevoir un produit à centrifuger, étant précisé que l'espace de centrifugation (13) est apte à être fermé à l'aide du couvercle (2) monté pivotant sur le boîtier (3), et qu'il est prévu sur le couvercle (2) au moins un élément de fixation en forme de crochet (4) qui est monté en rotation sur un tourillon (5), qui traverse le côté inférieur (2a) du couvercle et qui coopère avec un élément de fermeture (9) du boîtier (3), **caractérisé en ce que** l'élément de fermeture est constitué par un axe de fermeture (9) qui est monté à l'intérieur du boîtier (3), et **en ce que** l'élément de fixation (4) a une encoche (6) pour le verrouillage, dans laquelle une tige de verrouillage (11) d'un élément d'actionnement (15) est apte à venir en prise par complémentarité de forme, pour le verrouillage, l'élément d'actionnement (15) destiné à actionner la tige de verrouillage (11) étant commandé par une commande d'appareil en fonction de l'état de l'appareil.

2. Dispositif de fermeture de sécurité selon la revendication 1, **caractérisé en ce que** le tourillon (5) de l'élément de fixation (4) se trouve entre un côté supérieur (2b) et un côté inférieur (2a) du couvercle (2).

3. Dispositif de fermeture de sécurité selon la revendication 1 ou 2, **caractérisé en ce que** l'élément de fixation (4) a un palier de fixation (4b) dans lequel l'axe de fermeture (9) est au moins partiellement enserré, dans la position fermée du couvercle (2), et ledit axe de fermeture (9) est monté en étant soumis à la contrainte élastique d'un anneau d'étanchéité (16) qui réalise l'étanchéité de l'espace de centrifugation (13) entre le couvercle (2) et le boîtier (3).

4. Dispositif de fermeture de sécurité selon la revendication 3, **caractérisé en ce que** l'élément de fixation (4) a une saillie de fixation (4a) qui, pour l'ouverture et la fermeture du couvercle (2), doit être surmontée à l'encontre de la force de ressort de l'anneau d'étanchéité (16) contraint.

5. Dispositif de fermeture de sécurité selon l'une des revendications 1 à 4, **caractérisé en ce que** si plusieurs éléments de fixation (4) sont prévus, ils sont reliés entre eux par un élément de liaison (7), et cet élément de liaison (7) traverse une ouverture (19) du côté avant (2d) du couvercle et est relié à cet endroit à un rebord formant poignée (8).

6. Dispositif de fermeture de sécurité selon l'une des revendications 1 à 5, **caractérisé en ce qu'**il est prévu un capteur approprié pour explorer la position de l'élément de fixation (4) en vue de déclencher le rotor (14) dans la position fermée du couvercle (2).
